# EUROPEAN PATENT APPLICATION

(11) **EP 2 463 211 A1**
(43) Date of publication of application: **13.06.2012**
(21) Application number: 10306386.3
(22) Date of filing: 09.12.2010
(51) Int. Cl.: B65D 25/52, B65D 83/04, B65D 83/06, G01F 11/26

(54) **Container for delivering a fragile or sensitive product**

(71) Applicant: Albéa Services, 92230 Gennevilliers (FR)
(72) Inventor: Seguin, Franck, 92230 Genevilliers (FR)
(74) Representative: Callon de Lamarck, Jean-Robert

(57) **Abstract**

A container (10) for distributing a product (12) is provided, the container comprising a lower part (14) comprising a storage cavity (16) for storing the product. The container further comprises an upper part (30) comprising a collecting cup (32) defining a recess (34) to hold a reduced quantity of product. The upper part further defines an opening (20) to allow a user to introduce his or her fingertip or an applicator into the collecting cup to retrieve product from the recess. In use, by tilting or shaking the container (10) sufficiently, product from the storage cavity fills the collecting cup (32). Thereafter, by setting the container upright, excess product can return from the collecting cup (32) back to the storage cavity (16) so that only the reduced quantity of product remains in the recess (34) of the collecting cup of the upper part. In an embodiment, the collecting cup comprises at least one orifice (52) for allowing transfer of product between the storage cavity and the collecting cup (32).

## Description

### FIELD OF THE INVENTION

This invention relates to a container for delivering a fragile or sensitive product, such as a sensitive cosmetic formula or powder.

### BACKGROUND OF THE INVENTION

Cosmetic containers comprising a lower part having a cavity for storing cosmetic product, and a cap for closing the cavity, are known. A user is thus able to take a quantity of product from the container by opening the cap and inserting his or her finger, or an applicator, into the product in the cavity.

However, it has been found that known containers are not well-adapted for storing products which are sensitive or volatile, such as encapsulated or otherwise pressure sensitive formulas or powders that can break down into unwanted finer particles, if repeatedly manipulated. Indeed, such products can be rapidly damaged or soiled by repeatedly inserting a finger or an applicator into the product. It has also been found that these containers are not well-adapted for products which must be applied in very small quantities, such as for instance eye contour care products. Obtaining only a small, applicable dose of product can in this case be very difficult.

### OBJECT OF THE INVENTION

It is thus an aim of the present invention to provide a container for a cosmetic product which facilitates the dispensing of small quantities of product, while preserving the product stored in the container.

### SUMMARY OF THE INVENTION

According to the invention there is provided a container for distributing a product, the container comprising:
a lower part comprising a storage cavity for storing the product; and
an upper part comprising a collecting cup defining a recess to hold a reduced quantity of product, the upper part further defining an opening to allow a user to introduce his or her fingertip or an applicator into the collecting cup to retrieve cosmetic product from the recess,
wherein, by tilting or shaking the container, product from the storage cavity fills the collecting cup and, thereafter, by setting the container upright, excess product can return from the collecting cup back to the storage cavity so that only the reduced quantity of product remains in the recess of the collecting cup of the upper part.

By "reduced quantity", it is meant a quantity of product which is small as compared to the quantity of product which can be stored in the storage cavity.

In an embodiment, the collecting cup comprises at least one orifice for allowing transfer of product between the storage cavity and the collecting cup.

In an embodiment, the orifice is arranged above the recess when the container is in an upright position.

In an embodiment, the collecting cup comprises a plurality of orifices arranged around the recess at regularly spaced angular positions.

In an embodiment, the collecting cup prevents the user from introducing his finger into the storage cavity.

In an embodiment, the recess has a rounded shape for fitting a shape of a digital pulp of a user's fingertip.

In an embodiment, the collecting cup extends into the storage cavity.

In an embodiment, the container comprises a cap for closing the opening so as to prevent product from escaping the container when tilting or shaking the container.

In an embodiment, the cap comprises an inner surface having concave or convex portions for distributing the product within the collecting cup when the container is tilted.

In an embodiment, the cap comprises an inner skirt that can abut against a first peripheral wall of the upper part so as to close the opening when the cap is fitted to the upper part.

In an embodiment, the cap and the upper part comprise fixing means for fixing the cap to the upper part.

In an embodiment, the fixing means comprise cooperating threaded portions provided on an inner surface of the cap and on an outer surface of a second peripheral wall of the upper part.

In an embodiment, the lower part comprises a wall having an opening and the upper part comprises a skirt adapted for being introduced into the opening for tightly connecting the upper part to the lower part.

In an embodiment, the upper part and the lower part comprise fixing means for fixing the upper part to the lower part.

In an embodiment, the fixing means comprise a protrusion and a recess for catching the protrusion when the lower part is inserted into the upper part so as to prevent the lower part from being pulled away from the upper part.

In an embodiment, the upper part and the lower part comprise anti-rotation means for preventing rotation of the upper part relative to the lower part.

In an embodiment, the anti-rotation means comprises a rib and a groove for receiving the rib.

In an embodiment, the container comprises a removable sealing membrane fixed to the upper part so as to seal the opening.

In an embodiment, the container comprises a skirt and a shoulder adapted for receiving the skirt of another identical container, so as to enable the containers to be stacked one above the other.

In an embodiment, the skirt or the shoulder has ribs for maintaining the stacked container together by friction.

In an embodiment, the container comprises a cosmetic product stored into the storage cavity, the cosmetic product being in a powder form.

In an embodiment, the container comprises a product stored into the storage cavity, the cosmetic product comprising a pressure sensitive powder, which transforms from powder to liquid under the effect of pressure.

In an embodiment, the container comprises a cosmetic product stored into the storage cavity, the cosmetic product comprising particles including microcapsules containing a cosmetic composition which is released from the microcapsules when the microcapsules are crushed.

### BRIEF DESCRIPTION OF THE DRAWINGS

- **Figure 1**: shows an exploded perspective view of a cosmetic container according to an embodiment of the present invention;
- **Figure 2**: shows an exploded cross-sectional side view of the cosmetic container shown in Figure 1;
- **Figure 3**: shows a detailed cross-sectional side view of the cosmetic container shown in Figure 1, in an assembled configuration;
- **Figure 4**: shows a perspective view of the cosmetic container, in its assembled configuration;
- **Figure 5**: shows a top view of the upper part of the cosmetic container, the upper part being arranged to present a reduced quantity of cosmetic product to a user;
- **Figures 6A to 6D**: show a series of four steps that illustrate the operation of the cosmetic container; and
- **Figure 7**: shows a partly cross-sectional side view of two cosmetic containers, of the type shown in Figure 1, stacked together.

### DESCRIPTION OF PREFERRED EMBODIMENTS

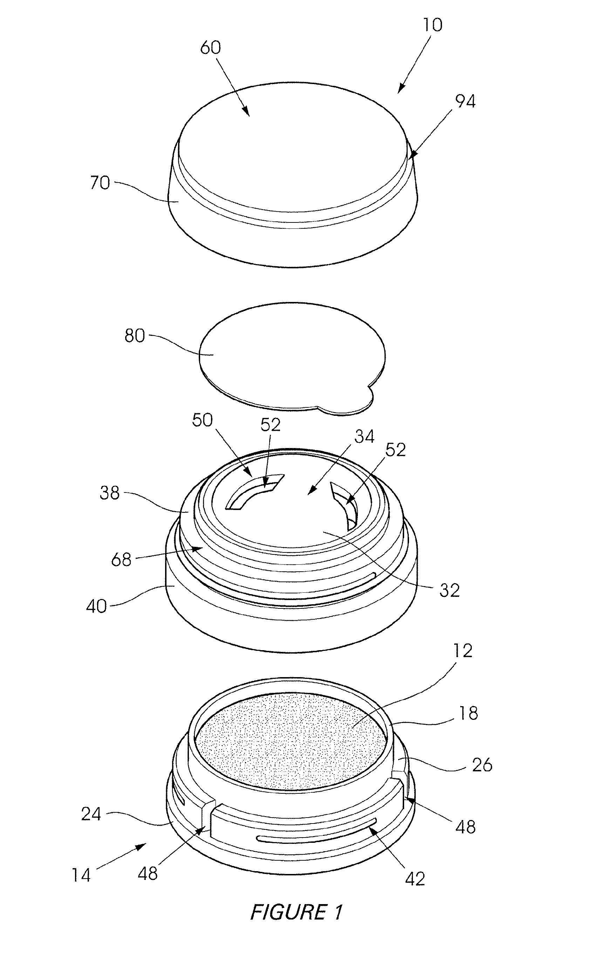

Referring to Figures 1 to 5, a generally cylindrical container 10 for a cosmetic product 12 comprises a lower part or base 14 that defines a storage cavity 16 for storing a cosmetic product 12. The cosmetic product 12 is typically of a sensitive or volatile nature, such as pressure sensitive formulas that tend to turn to liquid upon pressure, or it may be a product that is only required to be applied in very small quantities, such as eye contour care products.

The lower part 14 comprises an inner peripheral wall 18 that defines an opening 20, an intermediate wall 22 extending away from the peripheral wall 18, and a base skirt 24 extending from the intermediate wall 22. A first shoulder 26 is accordingly defined between the inner peripheral wall 18 and the intermediate wall 22, with a second shoulder 28 being defined between the intermediate wall 22 the base skirt 24.

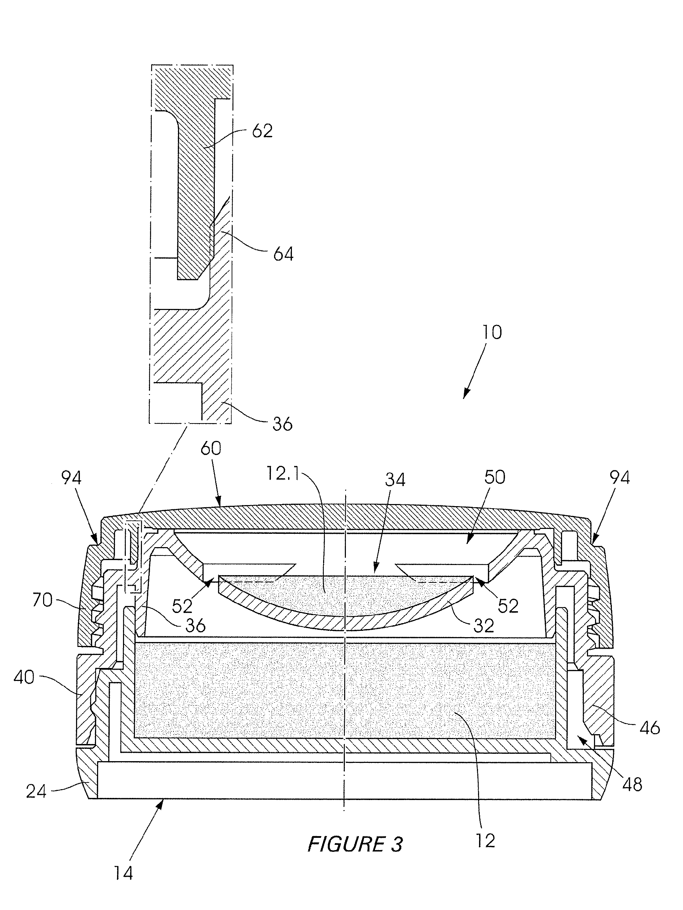

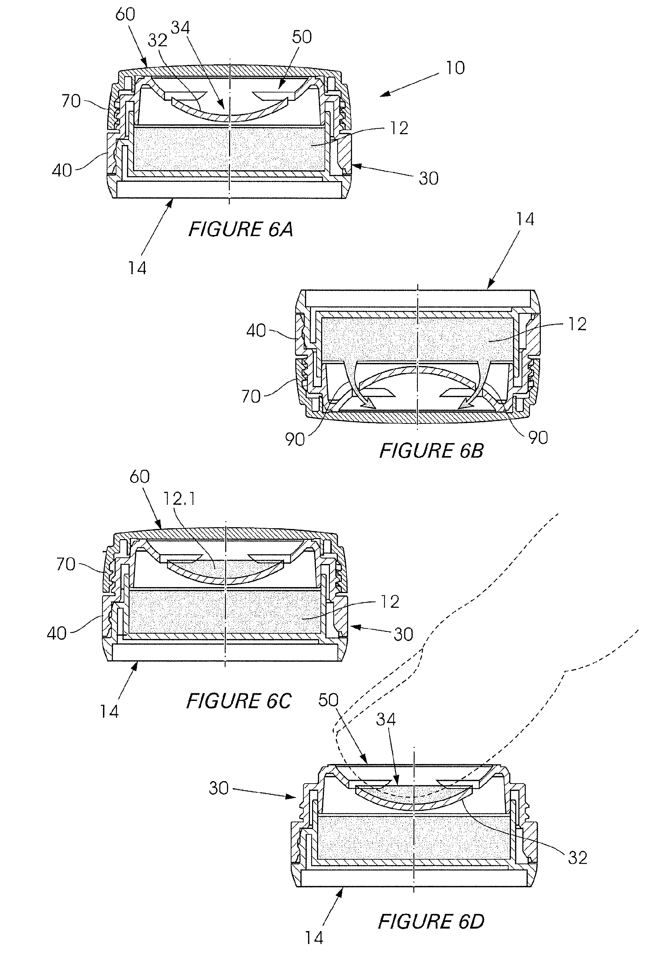

The cosmetic container 10 further comprises an upper part or dispensing part 30 comprising a spherical collecting cup 32 defining a recess 34 to hold a reduced quantity of cosmetic product 12.1, as shown in Figure 3, but which will be described in more detail further on in the specification with particular reference to Figures 6A to 6D.

The collecting cup 32 is carried by a peripheral skirt 36, a lower part of which abuts against the inner peripheral wall 18 of the lower part 14, the skirt 36 being adapted to be introduced into the opening 20 of the lower part 14 for tightly connecting the upper part 30 to the lower part 14, as best shown in Figure 3.

An upper intermediate wall 38 extends from the peripheral skirt 36 and is arranged to rest upon the first shoulder 26 of the lower part 14. A lower peripheral side wall 40 extends from the intermediate wall 38 to snugly enclose the intermediate wall 22 of the lower part 14 and to rest upon, or at least lie proximate to, the second shoulder 28 of the lower part 14, as best shown in Figure 3.

The upper part 30 and the lower part 14 may comprise fixing means for permanently fixing the upper part 30 to the lower part 14. In an embodiment, the fixing means comprise a protrusion 42 extending from the intermediate wall 22 of the lower part 14, and a complementary recess 44 defined on the inner part of the lower peripheral side wall 40 for catching the protrusion 42 when the lower part 14 is inserted into the upper part 30. This prevents the lower part 14 from being pulled away from the upper part 30.

In this way, the upper part 30 can be locked on the lower part 14 once the cavity 16 of the lower part 14 has been filed with cosmetic product 12. Once the protrusion 42 is caught into the recess 44, the upper part 30 and the lower part 14 are inseparable, thus preventing access to the storage cavity 16.

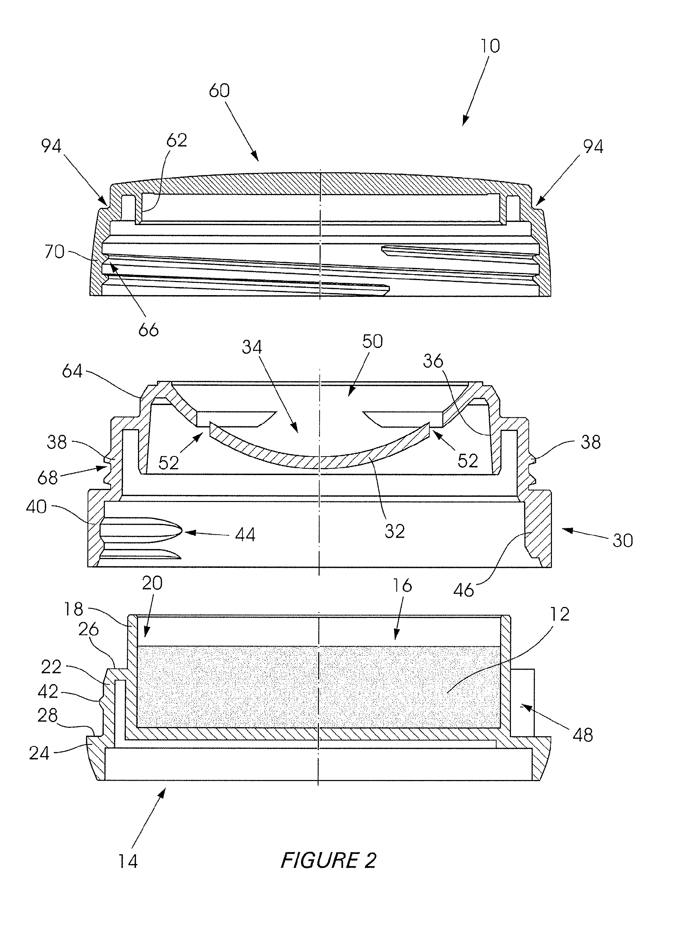

In an embodiment, the upper part 30 and the lower part 14 comprise anti-rotation means for preventing rotation of the upper part 30 relative to the lower part 14. The anti-rotation means may comprise a rib 46 (or a plurality of ribs) extending inwardly from the inner part of the lower peripheral side wall 40, as best shown in Figure 2, and a corresponding groove 48 (or plurality of grooves) on the intermediate wall 22 of the lower part 14 for receiving the rib 46.

The upper part 30 further defines an opening 50 to allow a user to introduce his or her fingertip into the collecting cup 32 to retrieve cosmetic product 12 from the recess 34. This will be explained in more detail further below with reference to Figures 6A to 6D. Conveniently, the recess 34 has a rounded, spherical shape to accommodate the terminal end of the user's fingertip, with the collecting cup 32 typically extending into the storage cavity 16, as best shown in Figure 3. More precisely, the recess 34 has a rounded shape for fitting a shape of a digital pulp of the fingertip.

In an embodiment, the depth of the recess 34 is less than half the diameter of the opening 50.

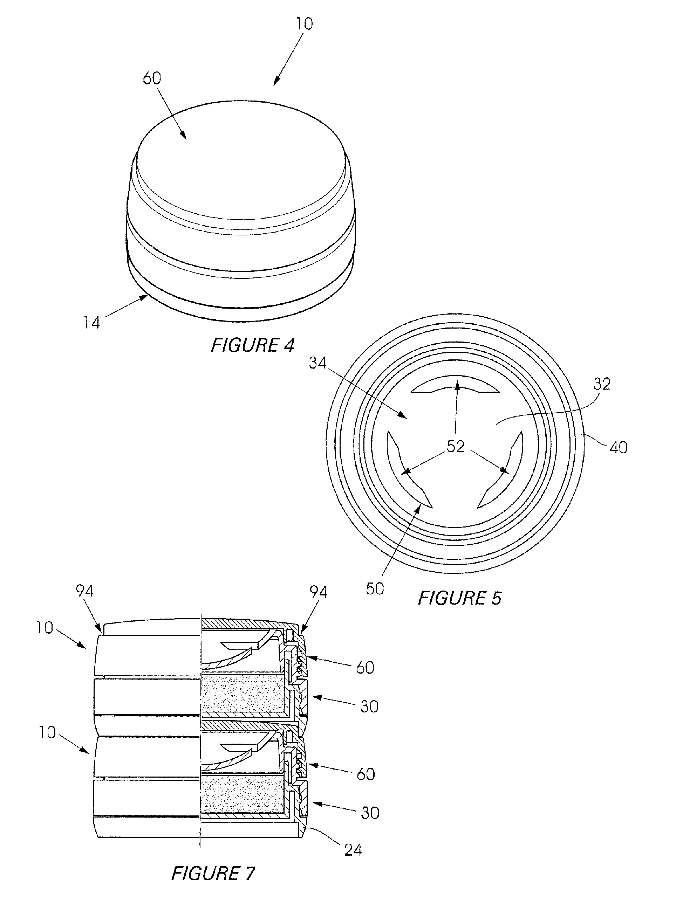

The collecting cup 32 comprises a plurality of orifices 52 arranged above and around the recess 34 at regularly spaced angular positions. In the illustrated embodiment, the orifices 52 take the form of curved slits, as best shown in Figures 1 and 5, but any one of a number of other possible shapes and configurations may be used, the purpose of the orifices 52 being to allow transfer of cosmetic product 12 between the storage cavity 16 and the collecting cup 32.

In an embodiment, the orifices 52 are arranged above the recess 34, but below the opening 50, when the container 10 is in an upright position.

Conveniently, the collecting cup 32 prevents the user from introducing his or her finger directly into the storage cavity 16 and hence eliminates the risk of accidentally damaging the sensitive formula.

The container 10 further comprises a cover or cap 60 for closing the opening 50. In an embodiment, the cap 60 comprises an inner skirt 62 that can snugly abut against a first peripheral wall 64 of the upper part 30, which corresponds to an upper part of the peripheral skirt 36, so as to sealingly close the opening 50 when the cap 60 is fitted to the upper part 30. This fit is best shown in the detailed view in Figure 3.

Conveniently, the cap 60 and the upper part 30 comprise fixing means for releasably fixing the cap 60 to the upper part 30. In an embodiment, the fixing means comprise cooperating threaded portions 66, 68 provided on an inner surface of a side wall 70 of the cap 60 and on an outer surface of a second peripheral wall, which may correspond to the upper intermediate wall 38 described above, of the upper part 30, respectively, to enable the cap 60 to be threadably secured to the upper part 30.

In an embodiment, the container 10 comprises a removable sealing membrane 80 fixed to the upper part 30 so as to seal the opening 50.

Turning now to Figures 6A to 6D, in use, the container 10 is initially at rest, as shown in Figure 6A. In this position, the cosmetic product 12 is accommodated within the storage cavity 16 of the lower part 14. A user may then tilt the container 10 sufficiently to enable the cosmetic product 12 within the lower part 14 to pass through the orifices 52, as indicated by arrows 90 in Figure 6B, so as to fill the collecting cup 32. The cap 60 prevents cosmetic product 12 from escaping the container 10 whilst the container 10 is being tilted. In this regard, although not shown, the inner surface of the cap 60 may comprise concave or convex portions for distributing the product 12 within the collecting cup 32 when the container 10 is tilted.

The container 10 may then be set upright, as shown in Figure 6C. This results in excess cosmetic product 12 returning from the collecting cup 32 back to the storage cavity 16, back through the orifices 52, so that only a reduced quantity of cosmetic product 12.1 remains in the recess 34 of the collecting cup 32 of the upper part 30.

The user may then remove the cap 60, as shown in Figure 6D, thereby allowing him/her to access the product 12.1 that has accumulated in the collecting cup 32, as shown.

It can be seen that depending on the application, the dose or quantity of product to be used, the size and depth of the collecting cup can be selected in order to achieve the optimum amount of product presented to the user.

Turning now also to Figure 7, the skirt 24 of the lower part 14 can nest within a complementary shoulder 94 for receiving the skirt 24 of another identical, superjacent container 10. This conveniently enables a plurality of containers 10 to be stacked one above the other. In an embodiment, the skirt 24 or the shoulder 94 has ribs for maintaining the stacked container together by friction.

Thus, with the cosmetic container 10 of the present invention only a reduced quantity of cosmetic product 12 is presented to the user. The user can take only an appropriate quantity of product from the recess 34 without the need to access the storage cavity 16. Therefore, the product 12 contained in the storage cavity 16 is preserved from being damaged or soiled. In addition, the proposed container is easy to use, by simply tilting and setting upright the container. Advantageously, such a container does not need a complex mechanism for dispensing the product 12.

In an embodiment, the volume of cosmetic product 12 contained in the storage cavity 16 of the lower part 14 is 5 mL, while the volume of the recess 34 in the collecting cup 32 is between 0,1 mL and 0,6 mL, typically 0,3 mL. In addition, in an embodiment, the diameter of the opening 50 allowing the user to introduce a finger tip is between 15 and 30 mm, typically 24 mm.

## Claims

1. A container for distributing a product, the container comprising:
a lower part comprising a storage cavity for storing the product; and
an upper part comprising a collecting cup defining a recess to hold a reduced quantity of product, the upper part further defining an opening to allow a user to introduce his or her fingertip or an applicator into the collecting cup to retrieve product from the recess,
wherein, by tilting or shaking the container, product from the storage cavity fills the collecting cup and, thereafter, by setting the container upright, excess product can return from the collecting cup back to the storage cavity so that only the reduced quantity of product remains in the recess of the collecting cup of the upper part.

2. The container according to claim 1, wherein the collecting cup comprises at least one orifice for allowing transfer of product between the storage cavity and the collecting cup.

3. The container according to claim 2, wherein the orifice is arranged above the recess when the container is in an upright position.

4. The container according to one of claims 2 and 3, wherein the collecting cup comprises a plurality of orifices arranged around the recess at regularly spaced angular positions.

5. The container according to one of claims 1 to 4, wherein the collecting cup prevents the user from introducing his finger into the storage cavity.

6. The container according to one of claims 1 to 5, wherein the recess has a rounded shape for fitting a digital pulp of a user's fingertip.

7. The container according to one of claims 1 to 6, wherein the collecting cup extends into the storage cavity.

8. The container according to one of claims 1 to 7, further comprising a cap for closing the opening so as to prevent product from escaping the container when tilting or shaking the container.

9. The container according to claim 8, wherein the cap comprises an inner surface having concave or convex portions for distributing the product within the collecting cup when the container is tilted.

10. The container according to one of claims 8 or 9, wherein the cap comprises an inner skirt that can abut against a first peripheral wall of the upper part so as to close the opening when the cap is fitted to the upper part.

11. The container according to one of claims 8 to 10, wherein the cap and the upper part comprise fixing means for fixing the cap to the upper part.

12. The container according to claim 11, wherein the fixing means comprise cooperating threaded portions provided on an inner surface of the cap and on an outer surface of a second peripheral wall of the upper part.

13. The container according to one of claims 1 to 12, wherein the lower part comprises a wall having an opening and the upper part comprises a skirt adapted for being introduced into the opening for tightly connecting the upper part to the lower part.

14. The container according to one of claims 1 to 13, wherein the upper part and the lower part comprise fixing means for fixing the upper part to the lower part.

15. The container according to claim 14, wherein the fixing means comprise a protrusion and a recess for catching the protrusion when the lower part is inserted into the upper part so as to prevent the lower part from being pulled away from the upper part.

16. The container according to one of claims 1 to 15, wherein the upper part and the lower part comprise anti-rotation means for preventing rotation of the upper part relative to the lower part.

17. The container according to claim 16, wherein the anti-rotation means comprises a rib and a groove for receiving the rib.

18. The container according to one of claims 1 to 17, comprising a removable sealing membrane fixed to the upper part so as to seal the opening.

19. The container according to one of claims 1 to 18, comprising a skirt and a shoulder adapted for receiving the skirt of another identical container, so as to enable the containers to be stacked one above the other.

20. The container according to claim 19, wherein the skirt or the shoulder has ribs for maintaining the stacked container together by friction.

21. The container according to one of claims 1 to 20, comprising a cosmetic product stored into the storage cavity, the cosmetic product being in a powder form.

22. The container according to one of claims 1 to 21, comprising a product stored into the storage cavity, the cosmetic product comprising a pressure sensitive powder, which transforms from powder to liquid under the effect of pressure.

23. The container according to one of claims 1 to 22, comprising a cosmetic product stored into the storage cavity, the cosmetic product comprising particles including microcapsules containing a cosmetic composition which is released from the microcapsules when the microcapsules are crushed.
